(19) Europäisches Patentamt / European Patent Office / Office européen des brevets

(11) **EP 4 016 553 B1**

(12) **EUROPÄISCHE PATENTSCHRIFT**

(45) Veröffentlichungstag und Bekanntmachung des Hinweises auf die Patenterteilung:
**07.02.2024  Patentblatt 2024/06**

(21) Anmeldenummer: **21216684.7**

(22) Anmeldetag: **21.12.2021**

(51) Internationale Patentklassifikation (IPC):
**H01B 13/008** (2006.01)    **B60L 53/18** (2019.01)
**H01G 11/02** (2013.01)    **B65H 75/26** (2006.01)

(52) Gemeinsame Patentklassifikation (CPC):
**H01B 13/008; B60L 53/18; B65H 75/36;**
B65H 2701/34; Y02T 10/70; Y02T 10/7072;
Y02T 90/14

(54) **LADEKABEL, VORRICHTUNG SOWIE VERFAHREN ZUR HERSTELLUNG DES LADEKABELS**

CHARGING CABLE, DEVICE AND METHOD FOR MANUFACTURING THE CHARGING CABLE

CÂBLE DE CHARGE, DISPOSITIF, AINSI QUE PROCÉDÉ DE FABRICATION DU CÂBLE DE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2020  DE 102020134477**

(43) Veröffentlichungstag der Anmeldung:
**22.06.2022  Patentblatt 2022/25**

(73) Patentinhaber: **sl-emobility GmbH**
**70199 Stuttgart (DE)**

(72) Erfinder: **Mateski, Saso**
**70199 Stuttgart (DE)**

(74) Vertreter: **Taubert, Diana**
**ETL IP**
**Patent- und Rechtsanwaltsgesellschaft mbH**
**Clayallee 343**
**14169 Berlin (DE)**

(56) Entgegenhaltungen:
**EP-A1- 2 875 987     EP-A1- 3 194 321**
**EP-B1- 3 194 321     WO-A1-2016/020512**
**JP-A- S62 215 480**

**Beschreibung**

Die Erfindung betrifft ein Ladekabel zum Aufladen eines elektrischen Fahrzeuges, ein Verfahren sowie eine entsprechende Vorrichtung zur Herstellung eines Ladekabels.

Elektrofahrzeuge werden in der Regel über das allgemeine Stromnetz geladen. Dazu muss ein Elektrofahrzeug zu einer Ladestation (Ladesäule, Wallbox, usw.) fahren und ein Energiespeicher des Elektrofahrzeuges muss mit der Ladestation elektrisch verbunden werden. Die elektrische Verbindung erfolgt typischerweise mittels eines Ladekabels.

Das dazu vorgesehene Ladekabel muss nicht nur die notwendigen elektrischen Eigenschaften aufweisen, um den Ladeprozess einer Hochspannung-Batterie zu erfüllen, sondern es muss auch die Distanz zwischen Batterie und Ladestation überwinden, welche sich über mehrere Meter erstrecken kann.

Dies führt zu einem ziemlich sperrigen und voluminösen Ladekabel, welches nach dem Ladeprozess - meistens im Auto - wieder verstaut werden muss. Das Kabel wird dann mühsam vom Benutzer aufgerollt und verstaut oder einfach in den Kofferraum hineingeworfen. In beiden Fällen verursacht das Aufrollen/Ausrollen des Kabels eine Torsion im Kabelinneren, welche zu Beschädigungen bis zu Brüchen von Einzeladern führen kann. Je länger das Ladekabel ist, umso umständlicher wird das Verstauen des Ladekabels. Darüber hinaus bilden die Anschlussstellen zwischen Kabel und den schweren Ladestecker besonders anfällige Stellen, die zu Schaden kommen können, wenn das Ladekabel nicht ordnungsgemäß verstaut wird.

Es ist wünschenswert, ein Verstausystem für ein Ladekabel zu entwickeln, das das Verstauen des Ladekabels erleichtert und Schäden an dem Ladekabel selbst vorbeugen kann.

Der Erfindung liegt daher die Aufgabe zugrunde, ein Ladekabel derart zu formen, dass das Kabel nach dem Gebrauch einfach und platzsparend wieder verstaut werden kann. Insbesondere sollte das Ladekabel in der Ruhestellung so aufgewickelt sein, dass die vom Kabelhersteller empfohlenen Biegeradien eingehalten werden. Gleichzeitig sollte die Aufwicklung des Ladekabels kompakt sein, um möglichst wenig Platz, z. B. im Kofferraum des Elektrofahrzeuges, einzunehmen.

Die Aufgabe wird erfindungsgemäß durch ein Ladekabel mit den Merkmalen des Anspruchs 1, das sich einfach in einer konischen Aufwicklung verstauen lässt, gelöst.

Das Ladekabel der vorliegenden Erfindung umfasst einen Kabelabschnitt und mindestens ein Anschlusselement an einem Ende des Kabelabschnittes. Das Anschlusselement dient zur elektrischen Verbindung mit einer Ladebuchse eines elektrischen Fahrzeuges oder einer fahrzeugexternen Energiequelle. Das andere Ende des Kabelabschnittes kann mit einem zweiten Anschlusselement ausgestattet sein. Alternativ kann das Ladekabel in ein elektrisches Fahrzeug oder eine Ladestation integriert sein. In diesem Fall ist ein Ende des Kabelabschnittes fest mit dem elektrischen Fahrzeug oder der Ladestation verbunden. Der Kabelabschnitt ist derart geformt, dass der Kabelabschnitt mit einer Rückstellkraft in einer Ruhestellung gehalten wird, in der der Kabelabschnitt mehrere Windungen aufweist. Der Kabelabschnitt weist mindestens drei Unterabschnitte mit jeweils mindestens eine Windung auf, wobei ein erster Durchmesser eines ersten Unterabschnitts größer als ein zweiter Durchmesser eines zweiten Unterabschnitts und der zweite Durchmesser größer als ein dritter Durchmesser eines dritten Unterabschnitts ist. Mindestens ein Unterabschnitt weist zwei oder mehr Windungen mit dem gleichen Durchmesser auf.

Erfindungsgemäß weist der erste Unterabschnitt mindestens zwei Windungen mit dem ersten Durchmesser auf, der zweite Unterabschnitt mindestens zwei Windungen mit dem zweiten Durchmesser auf, und der dritte Unterabschnitt mindestens zwei Windungen mit dem dritten Durchmesser auf.

Der Kabelabschnitt ist derart geformt, dass er nach dem Gebrauch in seine Ruhestellung zurückfällt.

Erfindungsgemäß ist die Differenz zwischen dem ersten und zweiten Durchmesser und zwischen dem zweiten und dritten Durchmesser größer als das Doppelte des Durchmessers des Kabelabschnittes; in einer bevorzugten Ausgestaltung der Erfindung liegt die Differenz im Bereich des 2-faches bis 4-faches, noch bevorzugter im Bereich des 2,5-fachen bis 3,5-fachen, des Durchmessers des Kabelabschnittes.

Noch bevorzugter wird eine Differenz, die mindestens dreimal so groß wie der Durchmesser des Kabelabschnittes ist.

Um die Struktur des Kabelabschnittes nicht zu beschädigen, ist es vorteilhaft, wenn der Durchmesser der Windungen in einem Bereich zwischen dem 8- und 15-fachen des Durchmessers des Kabelabschnittes liegt. Bei Gleichstrom muss der Biegeradius mindestens das 10-faches des Kabeldurchmessers betragen.

Die Anzahl der Windungen in jedem Unterabschnitt, d.h. der Windungen mit dem gleichen Durchmesser, sollte vorzugsweise zwischen 2 und 5 liegen. In einer bevorzugten Ausgestaltung der Erfindung liegt die Anzahl der Windungen mit gleichem Durchmesser zwischen 2 und 4. In einer weiteren bevorzugten Ausgestaltung der Erfindung umfasst der Kabelabschnitt zwei Windungen im ersten Unterabschnitt und jeweils drei Windungen im zweiten und dritten Unterabschnitt.

Die Windungen weisen eine im Wesentlichen runde Form auf.

Die Anzahl der Unterabschnitte ist nicht auf 3 begrenzt und der Kabelabschnitt kann auch 4 oder mehr Unterabschnitte aufweisen, je nach Länge des Ladekabels.

Die Länge des Ladekabels kann zwischen 4m und 7m betragen. In einer bevorzugten Ausgestaltung der Erfindung beträgt die Länge des Ladekabels weniger als 6m. In einer weiteren bevorzugten Ausgestaltung der Erfindung beträgt die Länge des Ladekabels weniger als 5,5m. Die Anzahl der Windungen hängt von der Länge des Kabelabschnittes ab.

Ein weiterer Aspekt der Erfindung betrifft eine Ladestation mit integriertem Ladekabel. Das Ladekabel umfasst ein Anschlusselement an einem ersten Ende eines Kabelabschnittes des Ladekabels und ein zweites Ende, das einen festen elektrischen Anschluss zur Energiequelle der Ladestation bildet. Das Anschlusselement ist dazu geeignet, die Energiequelle der Ladestation mit einer Batterie eines Elektrofahrzeuges elektrisch zu verbinden. Die Ladestation kann eine Ladesäule, eine Wallbox, o.ä. umfassen. Das Ladekabel wird dann in der Ladestation verstaut, so dass das Ladekabel von außen nicht sichtbar ist. Auf dieser Weise wird das Ladekabel nicht nur ordentlich verstaut, sondern es wird auch vor Witterung geschützt.

In einer weiteren Ausgestaltung der Erfindung ist das Ladekabel in ein elektrisches Fahrzeug integriert. Das Ladekabel wird dann im Fahrzeug verstaut, beispielsweise hinter dem Kennzeichen.

Ein weiterer Aspekt der Erfindung betrifft eine Vorrichtung zur Herstellung eines Ladekabels mit konischer Aufwicklung gemäß Anspruch 9.

Die Zylinder weisen jeweils eine erste Grundfläche als Standfläche und eine der ersten Grundfläche gegenüberliegende zweite Grundfläche auf.

Bei der gestapelten ersten Ausführungsform der Vorrichtung ist jeweils zumindest eine Grundfläche der Zylinder geschlossen, um das Stapeln zu ermöglichen.

Bei der zweiten Ausführungsform der Vorrichtung ist zumindest eine Grundfläche der Zylinder offen ausgebildet ist, um das ineinander Stellen zu ermöglichen.

Bei beiden Ausführungsformen sind die Zylinder fest miteinander verbunden.

Zwischen der ersten Grundfläche und der zweiten Grundfläche des ersten Zylinders ist eine erste Höhe, zwischen der zweiten Grundfläche des ersten Zylinders und der zweiten Grundfläche des zweiten Zylinders ist eine zweite Höhe und zwischen der zweiten Grundfläche des zweiten Zylinders und der zweiten Grundfläche des dritten Zylinders ist eine dritte Höhe gegeben.

Die erste, zweite und dritte Höhe bei der ersten und zweiten Ausführungsform können sich unterscheiden, da bei der ersten Ausführungsform die jeweilige Höhe bestimmt, wieviel Windungen des Kabelabschnitts auf den entsprechenden Zylinder gewickelt werden können, während bei der zweiten Ausführungsform die Windungen auch in dem Zwischenraum zwischen dem ersten und dem zweiten Zylinder und dem Zwischenraum zwischen dem zweiten und dem dritten Zylinder angeordnet werden können. Die erste Höhe bestimmt vorzugsweise wiederum die maximale Anzahl der Windungen, während die zweite und dritte Höhe vorzugsweise zumindest einer Stärke des Kabelabschnitts entspricht.

Nach einer besonders bevorzugten Ausführungsform ist die Vorrichtung auf einer Grundplatte angeordnet, die vorzugsweise kreisförmig oder tropfenförmig ausgebildet ist.

Bevorzugt weist die Vorrichtung im Bereich der Kanten der Mantelfläche zur zweiten Grundfläche Mittel zur Festlegung der auf die Vorrichtung gewickelten Kabelabschnitte auf. Alternativ können stattdessen auch Durchgangsbohrungen vorgesehen sein, durch die Kabelbinder oder dergleichen zur Festlegung des Kabelabschnitts geführt werden können. Bevorzugt weist auch die Grundplatte entsprechende Mittel zur Festlegung oder Durchgangsbohrungen auf. Dabei werden diese derart platziert, dass bevorzugt die freien Enden des auf der Vorrichtung aufgewickelten Kabelabschnitts fixiert werden können.

Zur Fixierung des einen Endes des Kabelabschnitts auf der Grundplatte ist es vorteilhaft, wenn diese tropfenförmig ist, so dass das eine Ende des Kabelabschnitts im spitz ausgeformten Bereich der tropfenförmigen Grundplatte angeordnet werden kann. Vorteilhafterweise steht dem Nutzer in diesem Bereich mehr Platz zur Verfügung, so dass das Ende ohne Biegung fixiert werden kann. Bei dem anderen Ende, welches an der Mantelfläche des dritten Zylinders fixiert wird, befindet sich das Ende ohnehin in der Luft, so dass auch dieses ohne Biegung fixiert werden kann.

Bei der zweiten Ausführungsform der Vorrichtung ist vorzugsweise zur Verbesserung der Überleitung des Kabelabschnitts von der Mantelfläche des ersten Zylinders mit dem größten Durchmesser zur Mantelfläche des mittleren zweiten Zylinders und von dort wiederum zur Mantelfläche des dritteln Zylinders vorgesehen, dass entlang der Kante der zweiten Grundfläche in der Mantelfläche des ersten Zylinders und des zweiten Zylinders ein rechteckiger Abschnitt ausgespart ist. Die Höhe des Abschnitts entspricht bevorzugt in etwa der Stärke des Kabelabschnitts. Der rechteckige, ausgesparte Abschnitt weist vorzugsweise eine Länge auf, die der Hälfte bis ein Viertel des Umfangs der jeweiligen Mantelfläche entspricht.

Vorzugsweise ist an einer vertikalen Kante (parallel zur Mittelachse des jeweiligen Zylinders) der Mantelfläche, vorzugsweise an der Seite entgegen der Wickelrichtung eine Lasche vorgesehen, die mit der Mantelfläche im rechten Winkel zur Grundfläche verbunden ist und die in Richtung zur Mantelfläche des zweiten bzw. des dritten Zylinders geführt ist, ohne diesen zu berühren.

Der Abstand der Lasche zum jeweiligen Zylinder entspricht zumindest der Stärke des Kabelabschnitts, vorzugsweise des 1,5- fachen, mehr bevorzugt des 2-fachen der Stärke des Kabelabschnitts.

Es ist vorteilhaft, wenn die Differenz zwischen dem ersten und zweiten Durchmesser und zwischen dem zweiten und dritten Durchmesser im Bereich des 2-faches bis 4-faches, noch bevorzugter im Bereich des 2,5-fachen bis 3,5-fachen, des Durchmessers des Kabelabschnittes liegt. Vorzugsweise ist die Differenz mindestens dreimal so groß wie der Durchmesser des Kabelabschnittes.

In einer bevorzugten Ausgestaltung der Erfindung liegt der Durchmesser des ersten Zylinders zwischen 250mm und 280mm, der Durchmesser des zweiten Zylinders zwischen 190mm und 220mm und der Durchmesser des dritten Zylinders zwischen 130mm und 160mm. Vorzugsweise bestehen der erste, der zweite, der dritte Zylinder und gegebenenfalls die Grundplatte aus Holz, Aluminium-Blech oder Edelstahl-Blech, vorzugsweise aus Aluminium-Blech oder Edelstahl-Blech.

Ein weiterer Aspekt der Erfindung betrifft ein Verfahren gemäß Anspruch 12.

Vorzugsweise wird der aufgewickelte Kabelabschnitt entsprechend eines Temperaturprofils zwischen 25°C und 130°C erhitzt. Das Temperaturprofil setzt sich aus einer Aufwärmzeit, einer Haltezeit und einer Abkühlzeit zusammen. Beispielsweise kann die Aufwärmzeit ca. 25min betragen, wobei die Temperatur von 25°C bis auf 130°C ansteigt. Die Aufwärmzeit dient dazu, dass der Kunststoff des Kabelmantels langsam aufweicht. Sobald die Zieltemperatur erreicht ist, beginnt die Haltezeit. Diese beträgt ca. 25min bei 130°C. Anschließend wird das Kabel ca. 1 Stunde auf Zimmertemperatur abgekühlt. Diese Parameter können je nach Volumen des Temper-Ofens und Material des Kabelmantels variieren.

Nach dem Tempern und der Abkühlphase wird das Kabel gegengewickelt, wodurch die Rückstellkraft erhöht wird. Durch das Gegenwickeln wird der Durchmesser automatisch um 25 bis 35 mm größer. Dies betrifft alle drei Unterabschnitte.

Das Ladekabel der vorliegenden Erfindung weist eine sehr kompakte und platzsparende aufgewickelte Form auf. Durch das Temperieren des Kabelabschnittes erfolgt eine stabile Verformung des Kabelabschnittes, welcher sich durch die damit verbundene Rückstellkraft eigenständig in die konische Aufwicklung (Ruhestellung) zurückformt.

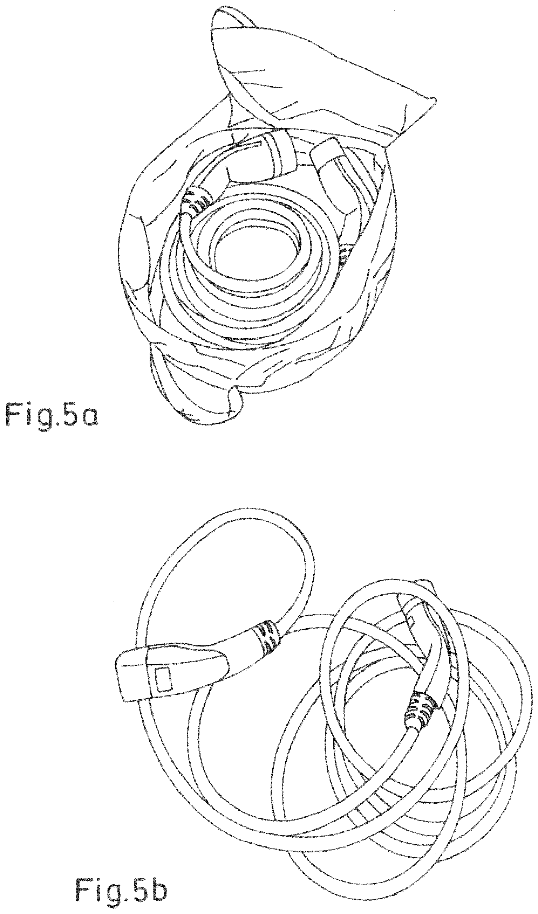

Der Nutzer braucht lediglich das Ladekabel bei der Benutzung axial zu ziehen, d.h. in eine Richtung parallel zur Achse der Windungen, und das Anschlusselement am Auto, bzw. an der Ladestation anzuschließen. Nach dem Gebrauch, *springt* der Kabelabschnitt des Ladekabels eigenständig in seine konische Ruhestellung zurück, wie in Fig. 5a gezeigt. Damit sind eine einfache Handhabung und ein leichtes Verstauen des Ladekabels gewährleistet.

Besonders vorteilhaft sind die gewählten Windungsradien, welche für Formstabilität und Einhaltung der empfohlenen Biegeradien sorgen, so dass eine Beschädigung des Ladekabels vermieden wird. Dazu lässt sich der Kabelabschnitt fast komplett auseinanderziehen, was für eine optimale Längennutzung und eine reduzierte Gesamtlänge des Ladekabels im Vergleich zu anderen Aufwicklungsmethoden sorgt.

Nachfolgend wird die Erfindung anhand bevorzugter Ausführungsbeispiele unter Bezugnahme auf die Figuren näher erläutert. Hierbei zeigen:

Fig. 1        eine schematische Darstellung eines erfindungsgemäßen Ladekabels,

Fig. 2a-2b    Querschnittsdarstellungen eines Kabelabschnittes entlang Querschnitt I-I' in Fig. 1,

Fig. 3        eine schematische Darstellung der Aufwicklung eines erfindungsgemäßen Ladekabels,

Fig. 4        eine schematische Aufsicht der Aufwicklung eines erfindungsgemäßen Ladekabels,

Fig. 5a       eine Abbildung eines erfindungsgemäßen Ladekabels in der Ruhestellung mit einer zugehörigen Aufbewahrungstasche,

Fig. 5b       eine Abbildung eines konventionellen Ladekabels,

Fig. 6        eine schematische Darstellung einer Vorrichtung zur Herstellung eines erfindungsgemäßen Ladekabels,

Fig. 7        eine schematische Querschnittsdarstellung der Vorrichtung von Fig. 6.

Fig. 8        eine perspektivische Ansicht einer Vorrichtung zur Herstellung eines erfindungsgemäßen Ladekabels nach einer zweiten Ausführungsform, und

Fig. 9        eine perspektivische Ansicht der Vorrichtung nach Fig. 8 mit einem aufgewickelten Kabelabschnitt.

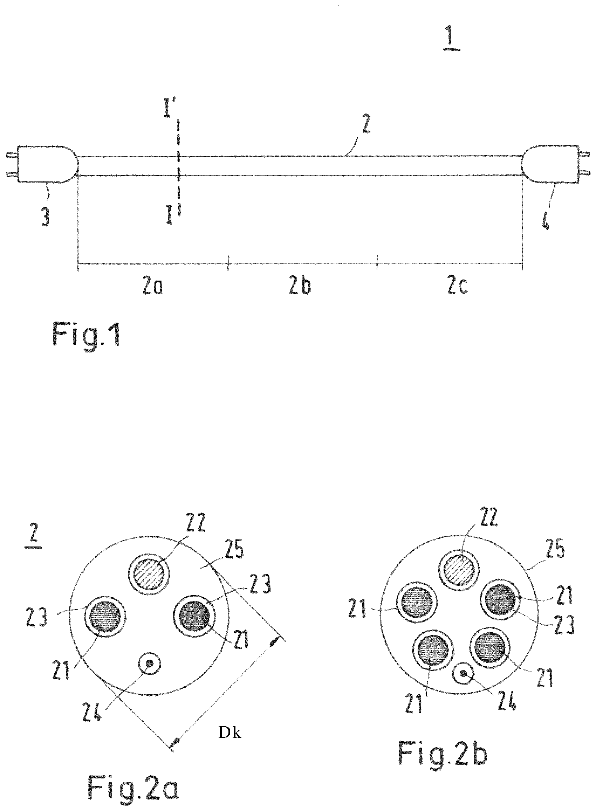

In Fig. 1 ist eine schematische Darstellung eines Ladekabels gezeigt. Das Ladekabel 1 umfasst einen Kabelabschnitt 2 und Anschlusselemente 3, 4 an beiden Enden des Kabelabschnittes 2. In weiteren Ausführungsvarianten kann das Ladekabel 1 einen einzigen Anschlusselement 3, 4 aufweisen, z.B. wenn das Ladekabel 1 in ein elektrisches Fahrzeug oder in eine Ladestation (Ladesäule, Wallbox, usw.) integriert ist.

Der Kabelabschnitt kann ein handelsübliches Kabel aufweisen, das die Anforderungen für das Aufladen eines elektrischen Fahrzeuges erfüllt. Typischerweise wird ein 1-phasiges oder 3-phasiges Kabel mit einer Belastbarkeit zwischen 16A und 32A verwendet.

Fig. 2a und 2b zeigen eine Querschnittsdarstellung eines Kabelabschnittes 2 entlang I-I' in Fig. 1, wobei Fig. 2a ein 1-phasiges Kabel und Fig. 2b ein 3-phasiges Kabel zeigt. Der Kabelabschnitt 2 umfasst mindestens zwei Innenleiter 21, eine Erdungsader 22 und eine Steuerader 24. Die Innenleiter 21, Steuerader und Erdungsader 22 sind von einem Isolationsmaterial 23 umhüllt und die isolierten Innenleiter, Erdungsader und Steuerader sind in einen Mantel 25 aus Kunststoff eingebettet. Typischerweise besteht ein Innenleiter 21 aus mehreren Kupferlitzen, aber weitere Materialien und Ausführungsformen können auch verwendet werden.

Der Mantel 25 besteht vorzugsweise aus Formgedächtnis-Polymeren, die einen Shape-Memory-Effekt aufweisen. Beispielsweise kann der Mantel 25 ein elastisches Polymer enthalten. Nicht einschränkende Beispiele sind TPE oder TPU.

Der typische Durchmesser Dk des Kabelabschnittes 2 kann zwischen 12mm und 32mm liegen. Vorzugsweise liegt der Durchmesser Dk des Kabelabschnittes 2 zwischen 12mm und 20mm.

In Fig. 1 wird der Einfachheit halber ein gerades Ladekabel 1 gezeigt. Im Endprodukt der vorliegenden Erfindung, d.h. nach dem thermischen Formungsprozess, ist der Kabelabschnitt 2 in der Ruhestellung nicht mehr geradlinig, sondern es ist in einer stabilen konischen Aufwicklung angeordnet.

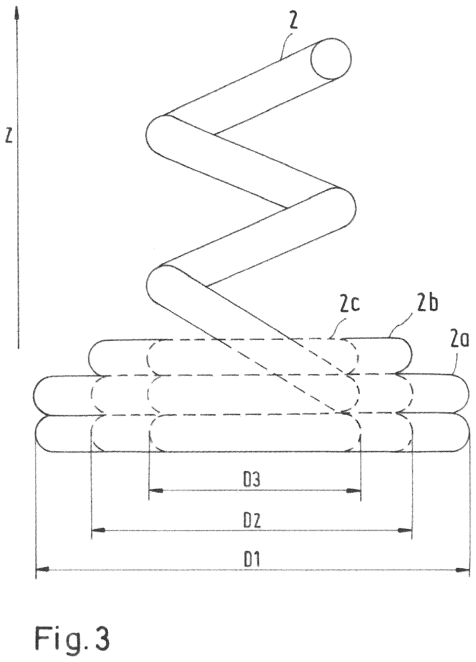

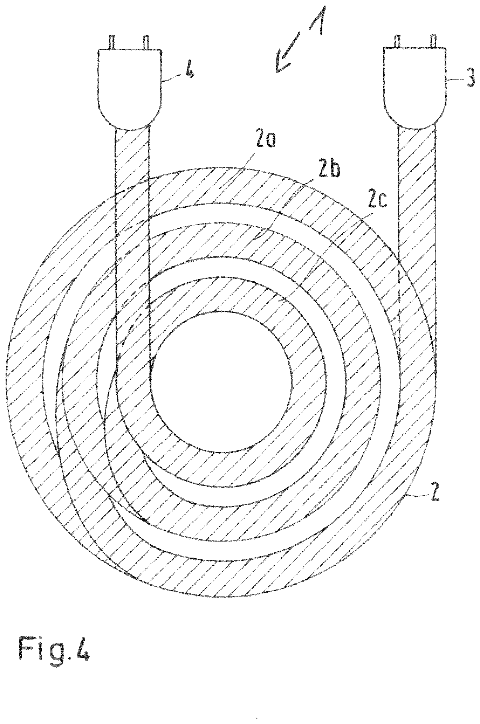

Fig. 3 zeigt eine schematische seitliche Darstellung und Fig. 4 zeigt eine schematische Aufsichtsdarstellung der Aufwicklung eines erfindungsgemäßen Ladekabels, in der der Kabelabschnitt 2 in mehreren Windungen mit unterschiedlichen Radien angeordnet ist. Im Ausführungsbeispiel von Fig. 3 bildet der erste Unterabschnitt 2a des Kabelabschnittes 2 zwei Windungen mit einem ersten Durchmesser D1, der zweite Unterabschnitt 2d drei Windungen mit einem zweiten Durchmesser D2 und der dritte Unterabschnitt 2c drei Windungen mit einem dritten Durchmesser D3.

Wie in Fig. 3 dargestellt, liegen die Windungen des ersten Unterabschnittes 2a, welche den gleichen Durchmesser D1 haben, übereinander. Der erste Durchmesser D1 ist größer als der zweite Durchmesser D2, so dass die Windungen des zweiten Unterabschnittes 2b vollständig innerhalb der Windungen des ersten Unterabschnittes 2a angeordnet sind, siehe Fig. 4. Auf gleiche Weise liegen die Windungen des zweiten Unterabschnittes 2b, welche den gleichen Durchmesser D2 haben, auch übereinander und der zweite Durchmesser D2 ist größer als der dritte Durchmesser D3, so dass die Windungen des dritten Unterabschnittes 2c - die ebenso übereinander liegen - vollständig innerhalb der Windungen des zweiten Unterabschnittes 2b angeordnet sind.

Damit dies gewährleistet wird, muss die Differenz zwischen dem ersten und zweiten Durchmesser D1-D2, sowie zwischen dem zweiten und dritten Durchmesser D2-D3, größer als das 2,5-fache des Durchmessers Dk des Kabelabschnittes 2 sein. Ferner sollte die Differenz nicht größer als das 3,5-fache des Kabeldurchmessers:

$$2{,}5 \cdot Dk \leq (D1-D2) \leq 3{,}5 \cdot Dk,$$

$$2{,}5 \cdot Dk \leq (D2-D3) \leq 3{,}5 \cdot Dk$$

sein.

In einer bevorzugten Ausführungsform der vorliegenden Erfindung, ist die Differenz zwischen dem ersten und zweiten Durchmesser D1-D2 sowie zwischen dem zweiten und dritten Durchmesser D2-D3 mindestens dreimal so groß wie der Durchmesser Dk des Kabelabschnittes 2.

In Fig. 3 wird weiter gezeigt, wie der Kabelabschnitt 2 des Ladekabels 1 aus der aufgewickelten Ruhestellung einfach *ausgezogen* werden kann, in dem ein Ende des dritten Unterabschnittes 2c entlang der vertikalen Richtung Z gezogen wird. Die Richtung Z verläuft parallel zur Drehachse der Windungen. Dann wird ein Anschlusselement 4 an der Ladestation eingesteckt, während das andere Anschlusselement an ein elektrisches Fahrzeug gekoppelt wird. Damit wird eine elektrische Verbindung zwischen Fahrzeug und Ladestation hergestellt und der Ladezyklus kann vollzogen werden. Nach dem Gebrauch zieht sich der Kabelabschnitt durch die Rückstellkraft zusammen und *springt* in seine Ruhestellung zurück.

Fig. 5a zeigt eine Abbildung eines erfindungsgemäßen Ladekabels in der Ruhestellung. Die konische Aufwicklung weist einen Durchmesser, der im Wesentlichen dem ersten Durchmesser D1 entspricht, und eine Höhe, die dem Produkt aus Durchmesser Dk des Kabelabschnittes 2 und Anzahl der Windungen entspricht, auf. Dadurch ist die konische Aufwicklung des Ladekabels besonders kompakt und stabil im Vergleich zu konventionellen Ladekabeln. Weil mindestens zwei Windungen mit dem gleichen Durchmesser vorgesehen sind, ist der erste Durchmesser relativ klein im Vergleich, z. B., zu einer schneckenförmigen Aufwicklung. Ferner, weil die Anzahl der Windungen mit dem gleichen Durchmesser relativ klein ist, ist die Gesamthöhe der Aufwicklung deutlich verringert, z. B. im Vergleich mit einer wendelförmigen Aufwicklung.

Das Ladekabel 1 gemäß der vorliegenden Erfindung weist eine kompakte Aufwicklung auf und kann einfach und ordentlich verstaut werden, wie in Figur 5a zu sehen ist. Im Vergleich dazu zeigt Fig. 5b ein konventionelles Ladekabel, d.h. ein Ladekabel, welches keinem thermischen Formgebungsverfahren ausgesetzt worden ist. Demzufolge liegt ein konventionelles Ladekabel entweder ungeordnet, z.B. im Kofferraum eines Elektrofahrzeuges, oder es muss aufwendig zusammengelegt werden. In beiden Fällen entstehen Verbiegungen, die nicht sachgemäß sind und zu einer Beschädigung des Ladekabels führen können.

Um Beschädigungen vorzubeugen, ist es vorteilhaft das Ladekabel so aufzuwickeln, dass der Durchmesser der Windungen zwischen dem 5- bis 20-fachen, bevorzugt zwischen dem 8- und 15-fachen, des Kabeldurchmessers Dk beträgt:

$$8 \leq D/Dk \leq 15,$$

in dem D für jeden der ersten, zweiten und dritten Durchmesser D1, D2, D3, und Dk für den Durchmesser des Kabelabschnittes steht.

Die kompakte konische Aufwicklung des erfindungsgemäßen Ladekabels hat einen relativ kleinen Durchmesser, beispielsweise von ca. 30 cm oder kleiner, und kann unproblematisch in eine entsprechend runde Aufbewahrungstasche verstaut werden, wie in Fig. 5a dargestellt. Die Aufbewahrungstasche kann zusätzlich mit einem Klettverschluss ausgestattet sein, um am Boden des Kofferraums befestigt zu werden.

Damit eine solche konische Aufwicklung vom Kabel erhalten wird, muss das Kabel einem thermischen Formgebungsprozess unterzogen werden, welcher im Folgenden im Detail beschrieben wird.

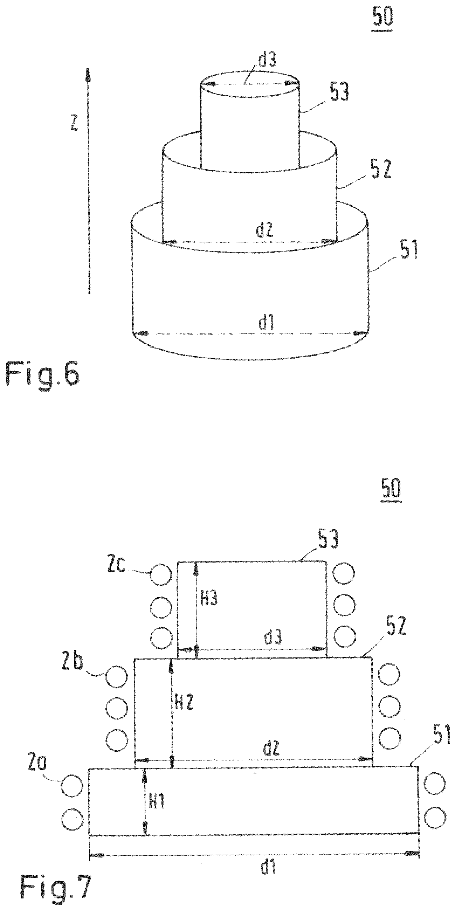

Fig. 6 zeigt eine erfindungsgemäße Vorrichtung, welche für die Herstellung eines konisch-aufgewickelten Ladekabels verwendet wird.

Die Vorrichtung 50 umfasst einen ersten Zylinder 51 mit einem ersten Durchmesser d1, einen zweiten Zylinder 52 mit einem zweiten Durchmesser d2 kleiner als der erste Durchmesser d1, und einen dritten Zylinder 53 mit einem dritten Durchmesser d3 kleiner als der zweite Durchmesser d2. Die drei Zylinder sind entlang der vertikalen Richtung Z aufeinandergestapelt. Die Anzahl der Zylinder ist nicht auf 3 begrenzt und die Vorrichtung 50 kann auch 4 oder mehr Zylinder aufweisen, je nach Länge des Ladekabels.

Die Vorrichtung kann weiterhin eine Grundplatte (Substrat) aufweisen, worauf die Zylinder angeordnet sind. Die Grundplatte (Substrat) und die Zylinder können beispielsweise aus Holz oder anderen geeigneten Materialien wie z.B. Aluminium-Blech und Edelstahl-Blech angefertigt werden. Der erste, zweite und dritte Durchmesser d1, d2, d3 der Zylinder 51, 52, 53 entsprechen im Wesentlichen dem ersten, zweiten und dritten Durchmesser D1, D2, D3 der Windungen des Kabelabschnittes 2, wobei jeder der ersten, zweiten und dritten Durchmesser d1, d2, d3 der Zylinder 51, 52, 53 etwas kleiner als der entsprechende erste, zweite und dritte Durchmesser D1, D2, D3 der Windungen des Kabelabschnittes 2 ist. Entsprechend beträgt die Differenz (D1-d1) in der Regel (1-2)·Dk. Auf gleiche Weise liegt auch die Differenz (D2-d2) sowie die Differenz (D3-d3) zwischen Dk und 2 Dk.

Fig. 7 zeigt eine schematische Querschnittsdarstellung der Vorrichtung 50 von Fig. 6. Hier wird ein Kabelabschnitt in der gewünschten Länge um die Zylinder aufgewickelt und befestigt, wobei ein erster Unterabschnitt 2a des Kabelabschnittes 2 um den ersten Zylinder 51, ein zweiter Unterabschnitt 2b um den zweiten Zylinder 52 und ein dritter Unterabschnitt 2c um den dritten Zylinder 53 aufgewickelt wird. Die Höhe H1, H2, H3 der Zylindern 51, 52, 53 entspricht ungefähr dem Produkt aus Kabeldurchmesser Dk und Anzahl der Windungen in dem entsprechenden Unterabschnitt 2a, 2b, 2c.

Nach dem Wickelprozess wird die Vorrichtung 50 samt Kabelabschnitt 2 in einem Temper-Ofen erhitzt. Typischerweise wird der Kabelabschnitt entsprechend einem Temperaturprofil zwischen 25°C und 130°C für ca. 50min erhitzt, wobei die Aufwärmzeit und die Haltezeit jeweils ca. 25min betragen. Während der Aufwärmzeit wird die Temperatur von 25°C bis auf 130°C erhöht, und dann bei 130°C ca. 25min gehalten (Haltezeit). Die Aufwärmzeit dient dazu, den Kunststoff des Kabelmantels langsam aufzuweichen. Anschließend wird der auf der Vorrichtung 50 aufgewickelte Kabelabschnitt 2 auf Zimmertemperatur heruntergekühlt.

Während des Temperprozesses wird der Mantel 25 des Kabelabschnittes 2 verformt, d.h. auf der Außenseite der Windungen wird der Mantel 25 gedehnt und auf der Innenseite wird er zusammengedrückt. Durch den thermischen Prozess wird sich die aufgewickelte Form im Material des Mantels 25 einprägen, so dass die Form nach dem Abkühlen stabil erhalten wird. Anschließend werden Anschlusselemente 3, 4 an ein Ende oder an beide Enden des Kabelabschnittes 2 angebracht.

In einem bevorzugten Ausführungsbeispiel hat der erste Zylinder 51 einen ersten Durchmesser d1 von 250mm, der zweite Zylinder 52 einen zweiten Durchmesser d2 von 190mm und der dritte Zylinder 53 einen dritten Durchmesser von 130 mm. Eine solche Vorrichtung 50 ist für Kabelabschnitte 2 mit einem Durchmesser zwischen 12mm und 17mm geeignet.

Obwohl das Ausführungsbeispiel in Fig. 3 und 4 zwei Windungen mit dem ersten Durchmesser D1, und jeweils drei Windungen mit dem zweiten und dritten Durchmesser aufweist, dient dies nur als beispielhafte Ausführungsform und eine davon abweichende Anzahl von ersten, zweiten und dritten Windungen ist weiterhin möglich, wobei die Anzahl von Windungen mit dem gleichen Durchmesser zwischen 2 und 5 liegen kann.

Ferner kann auch die Anzahl der Unterabschnitte 2a, 2b, 2c größer als 3 sein, je nach Gesamtlänge des Ladekabels 1. Beispielsweise kann der Kabelabschnitt 4 oder mehr Unterabschnitte aufweisen.

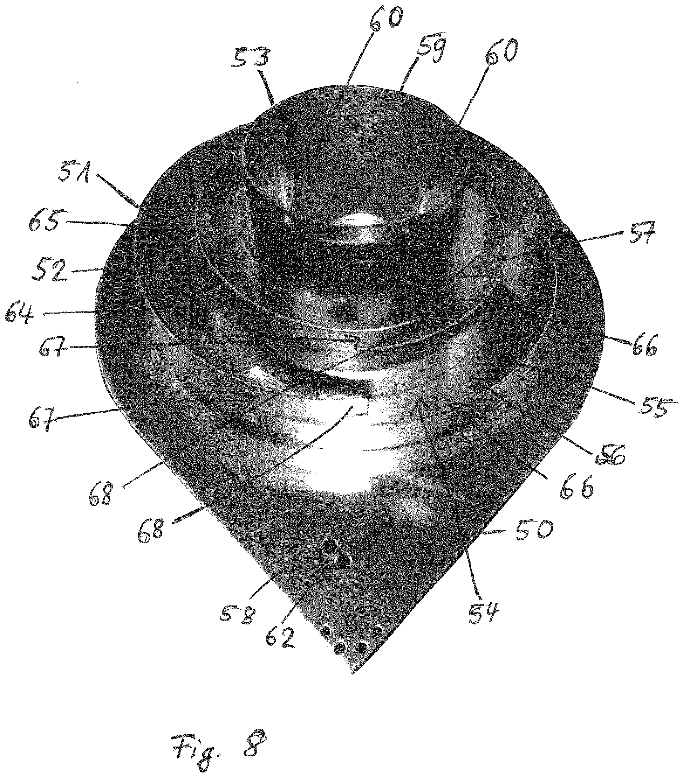

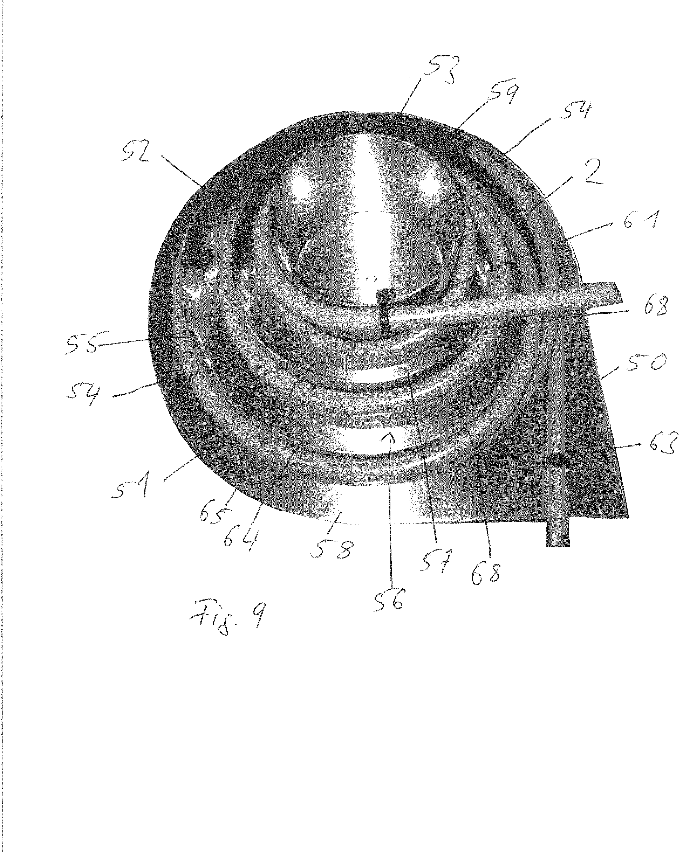

Bei der zweiten Ausführungsform der Vorrichtung 50, die in den Fig. 8 und 9 dargestellt ist, sind die drei Zylinder 51, 52, 53 ineinander stehend angeordnet. Dazu ist eine Grundfläche 54 der Zylinder 51, 52, 53 als Standfläche 54 vorgesehen und die der Standfläche 54 gegenüberliegende Grundseite 55 ist offen ausgebildet, um das ineinander Stellen der Zylinder 51, 52, 53 zu ermöglichen.

Bei der zweiten Ausführungsform der Vorrichtung 50 können die Windungen des Kabelabschnitts 2 auch in einem Zwischenraum 56 zwischen dem ersten und dem zweiten Zylinder 51, 52 und dem Zwischenraum 57 zwischen dem zweiten und dem dritten Zylinder 53, 53 angeordnet werden können. Die Vorrichtung 50 ist auf einer tropfenförmig ausgeformten Grundplatte 58 angeordnet, Weiterhin weist die Vorrichtung 50 im Bereich der freien Kante zur Mantelfläche 59 des dritten Zylinders 53 Durchgangsbohrungen 60 zur Festlegung des auf die Vorrichtung 50 gewickelten Kabelabschnitts 2 (Fig. 9) mittels eines Kabelbinders 61 auf. Zur Fixierung des einen Endes des Kabelabschnitts 2 ist auf der Grundplatte 58 im spitz ausgeformten Bereich zwei benachbarte Durchgangsbohrungen 62 vorgesehen, durch die ein Kabelbinder 63 geführt ist mittels dem des eine Ende des Kabelabschnitts 2 festgelegt ist (Fig. 9).

Bei der zweiten Ausführungsform der Vorrichtung 50 ist zudem zur Verbesserung der Überleitung des Kabelabschnitts 2 von der Mantelfläche 64 des ersten Zylinders 51 mit dem größten Durchmesser zur Mantelfläche 65 des mittleren zweiten Zylinders 52 und von dort wiederum zur Mantelfläche 59 des dritteln Zylinders 53 ist es vorgesehen, dass entlang der Kante der der Standfläche 54 gegenüberliegenden Grundfläche 55 in der Mantelfläche 64, 65 des ersten Zylinders 51 und des zweiten Zylinders 52 ein rechteckiger Abschnitt 66 ausgespart ist. Die Höhe des Abschnitts 66 entspricht bevorzugt in etwa der Stärke des Kabelabschnitts 2. Der rechteckige, ausgesparte Abschnitt 66 weist vorzugsweise eine Länge auf, die der Hälfte bis ein Viertel des Umfangs der jeweiligen Mantelfläche 64, 65 entspricht. An einer vertikalen Kante 67 der Mantelflächen 64, 65, an der Seite entgegen der Wickelrichtung des Kabelabschnitts 2 ist eine Lasche 68 vorgesehen, die mit der Mantelfläche 64, 65 im rechten Winkel zur Standfläche 54 verbunden ist und die in Richtung zur Mantelfläche 65, 59 des zweiten bzw. des dritten Zylinders 52, 53 geführt ist, ohne diesen zu berühren.

## Bezugszeichenliste

| | |
|---|---|
| 1 | Ladekabel |
| 2 | Kabelabschnitt |
| 2a | erster Unterabschnitt |
| 2b | zweiter Unterabschnitt |
| 2c | dritter Unterabschnitt |
| 3, 4 | Anschlusselement |
| 21 | Innenleiter |
| 22 | Erdungsader |
| 23 | Isolation |
| 24 | Steuerader |
| 25 | Mantel |
| 50 | Aufwicklungsvorrichtung / Vorrichtung |
| 51 | erster Zylinder |
| 52 | zweiter Zylinder |
| 53 | dritter Zylinder |
| 54 | Standfläche |
| 55 | der Standfläche gegenüberliegende Grundseite 55 |
| 56, 57 | Zwischenraum |
| 58 | Grundplatte |
| 59 | Mantelfläche |
| 60 | Durchgangsbohrungen |
| 61 | Kabelbinders |
| 62 | benachbarte Durchgangsbohrungen |
| 63 | Kabelbinder |
| 64, 65 | Mantelfläche |
| 66 | rechteckiger Abschnitt |
| 67 | vertikalen Kante |
| 68 | Lasche |
| | |
| Dk | Durchmesser des Kabelabschnitts |
| D1, D2, D3 | Durchmesser der Windungen |
| d1, d2, d3 | Durchmesser der Zylinder |

## Patentansprüche

1.  Ladekabel (1) zum Aufladen eines elektrischen Fahrzeuges umfassend einen Kabelabschnitt (2) und mindestens ein Anschlusselement (3) an einem ersten Ende des Kabelabschnittes (2), zum Verbinden mit einer Ladebuchse eines elektrischen Fahrzeuges oder einer fahrzeugexternen Energiequelle; wobei der Kabelabschnitt derart geformt ist, dass der Kabelabschnitt mit einer Rückstellungskraft in einer Ruhestellung gehalten wird, in der der Kabelabschnitt mehrere Windungen aufweist, wobei der Kabelabschnitt (2) aus mindestens drei Unterabschnitten (2a, 2b, 2c) besteht, wobei der erste Unterabschnitt (2a) einen ersten Durchmesser (D1), der zweite Unterabschnitt (2b) einen zweiten Durchmesser (D2) und der dritte Unterabschnitt (2c) einen dritten Durchmesser (D3) aufweist, der erste Durchmesser (D1) größer als der zweite Durchmesser (D2) und der zweite Durchmesser (D2) größer als der dritte Durchmesser (D3) ist, **dadurch gekennzeichnet, dass** die drei Unterabschnitte aus jeweils mindestens zwei Windungen bestehen, und dass die Differenz zwischen dem ersten und zweiten Durchmesser (D1, D2) und zwischen dem zweiten und dritten Durchmesser (D2, D3) größer als das Doppelte des Durchmessers (Dk) des Kabelabschnittes (2) ist.

2.  Ladekabel nach Anspruch 1, wobei der erste Durchmesser (D1), der zweite Durchmesser (D2) und der dritte Durchmesser (D3) zwischen dem 8-fachen und 15-fachen des Durchmessers (Dk) des Kabelabschnittes (2) betragen.

3.  Ladekabel nach Anspruch 1 oder 2, wobei der erste Unterabschnitt (2a), der zweite Unterabschnitt (2b) und der dritte Unterabschnitt (2c) jeweils maximal fünf Windungen aufweisen.

4.  Ladekabel nach einem der vorangehenden Ansprüche, wobei der erste Unterabschnitt (2a) zwei Windungen aufweist und der zweite und dritte Unterabschnitt (2b, 2c) jeweils drei Windungen aufweisen.

5.  Ladekabel nach einem der vorangehenden Ansprüche, wobei der Kabelabschnitt (2) derart geformt ist, dass er sich nach dem Gebrauch eigenständig in seine Ruhestellung zurückzieht.

6. Ladekabel nach einem der vorangehenden Ansprüche, weiter umfassend: ein zweites Anschlusselement (4) am zweiten Ende des Ladekabels (1).

7. Elektrofahrzeug umfassend ein Ladekabel (1) nach einem der Ansprüche 1 bis 6, in dem das zweite Ende des Ladekabels (1) einen festen elektrischen Anschluss zur Batterie des Elektrofahrzeuges bildet und das erste Anschlusselement (3) dazu geeignet ist, das Elektrofahrzeug mit einer externen Energiequelle einer Ladestation elektrisch zu verbinden.

8. Ladestation umfassend ein Ladekabel (1) nach einem der Ansprüche 1 bis 6, in dem das zweite Ende des Ladekabels (1) einen festen elektrischen Anschluss zur Energiequelle der Ladestation bildet und das erste Anschlusselement (3) dazu geeignet ist, die Energiequelle der Ladestation mit einer Batterie eines Elektrofahrzeuges elektrisch zu verbinden.

9. Vorrichtung (50) zum Formen eines Ladekabels (1) nach einem der Ansprüche 1 bis 6 unter Hitzeeinwirkung mit konischer Aufwicklung umfassend zumindest drei Zylinder (51, 52, 53), nämlich einen ersten Zylinder (51) mit einem ersten Durchmesser (d1), einen zweiten Zylinder (52) mit einem zweiten Durchmesser (d2) und einen dritten Zylinder (53) mit einem dritten Durchmesser (d3), wobei der erste Durchmesser (d1) größer als der zweite Durchmesser (d2) und der zweite Durchmesser (d2) größer als der dritte Durchmesser (d3) ist, wobei die Zylinder (51, 52, 53) übereinander gestapelt sind, und vorzugsweise jeweils zumindest eine Grundfläche der Zylinder (51, 52, 53) geschlossen ist oder wobei die Zylinder (51, 52, 53) ineinander stehend angeordnet sind, wobei vorzugsweise jeweils zumindest eine Grundseite der Zylinder (51, 52, 53) offen ausgebildet ist.

10. Vorrichtung nach Anspruch 9, **dadurch gekennzeichnet, dass** die Zylinder (51, 52, 53) eine erste Grundseite (54) als Standfläche und eine der ersten Grundseite (54) gegenüberliegende zweite Grundseite (54) aufweisen, wobei zwischen der ersten Grundfläche (54) und der zweiten Grundseite (55) des ersten Zylinders (51) eine erste Höhe (H1), zwischen der zweiten Grundseite (55) des ersten Zylinders (51) und der zweiten Grundseite (55) des zweiten Zylinders (52) eine zweite Höhe (H2) und zwischen der zweiten Grundseite (55) des zweiten Zylinders (52) und der zweiten Grundseite (55) des dritten Zylinders (53) eine dritte Höhe (H3) gegeben ist.

11. Vorrichtung nach Anspruch 9 oder 10, **dadurch gekennzeichnet**, die Vorrichtung (50) auf einer Grundplatte (58) angeordnet ist, die vorzugsweise rund oder tropfenförmig, besonders bevorzugt tropfenförmig ausgeformt ist.

12. Verfahren zum Formen eines Ladekabels (1) nach einem der Ansprüche 1 bis 6 mit konischer Aufwicklung bei dem ein Kabelabschnitt (2) auf eine Vorrichtung (50) nach einem der Ansprüche 11 bis 12 aufgewickelt wird, in dem ein erster Unterabschnitt (2a) des Kabelabschnittes (2) auf dem ersten Zylinder (51) der Vorrichtung, ein zweiter Unterabschnitt (2b) des Kabelabschnittes (2) auf dem zweiten Zylinder (52) der Vorrichtung und ein dritter Unterabschnitt (2c) des Kabelabschnittes (2) auf dem dritten Zylinder (53) der Vorrichtung aufgewickelt wird,
die Vorrichtung (50) mit darauf aufgewickeltem Kabelabschnitt (2) in einem Temper-Ofen aufgeheizt wird.

13. Verfahren nach Anspruch 12, in dem der Kabelabschnitt (2) auf eine Temperatur zwischen 25°C und 130°C für mindestens 50min erhitzt wird.

**Claims**

1. A charging cable (1) for charging an electric vehicle, comprising a cable portion (2) and at least one connecting element (3) at a first end of the cable portion (2), for connection to a charging socket of an electrical vehicle or a vehicle-external energy source; wherein the cable portion is formed such that the cable portion is retained, by a restoring force, in a resting position in which the cable portion has several windings, wherein the cable portion (2) consists of at least three sub-portions (2a, 2b, 2c), wherein the first sub-portion (2a) has a first diameter (D1), the second sub-portion (2b) has a second diameter (D2), and the third sub-portion (2c) has a third diameter (D3), the first diameter (D1) being greater than the second diameter (D2) and the second diameter (D2) being greater than the third diameter (D3), **characterized in that** the three sub-portions each consist of at least two windings and that the difference between the first and the second diameter (D1, D2) and between the second and the third diameter (D2, D3) is greater than twice the diameter (Dk) of the cable portion (2).

2. The charging cable according to Claim 1, wherein the first diameter (D1), the second diameter (D2), and the third diameter (D3) are between eight times and 15 times the diameter (Dk) of the cable portion (2).

3. The charging cable according to Claim 1 or 2, wherein the first sub-portion (2a), the second sub-portion (2b), and the third sub-portion (2c) each have at most five windings.

4. The charging cable according to any one of the preceding claims, wherein the first sub-portion (2a) has two windings and the second and the third sub-portion (2b, 2c) each have three windings.

5. The charging cable according to any one of the preceding claims, wherein the cable portion (2) is formed such that it autonomously reverts to its resting position after use.

6. The charging cable according to any one of the preceding claims, further comprising: a second connecting element (4) at the second end of the charging cable (1).

7. An electric vehicle comprising a charging cable (1) according to any one of Claims 1 to 6 in which the second end of the charging cable (1) forms a fixed electrical connection to the battery of the electric vehicle and the first connecting element (3) is suitable for electrically connecting the electric vehicle to an external energy source of a charging station.

8. A charging station comprising a charging cable (1) according to any one of Claims 1 to 6 in which the second end of the charging cable (1) forms a fixed electrical connection to the energy source of the charging station and the first connecting element (3) is suitable for electrically connecting the energy source of the charging station to a battery of an electric vehicle.

9. A device (50) for forming a charging cable (1) according to any one of Claims 1 to 6 under heat with conical winding, comprising at least three cylinders (51, 52, 53), namely a first cylinder (51) with a first diameter (d1), a second cylinder (52) with a second diameter (d2), and a third cylinder (53) with a third diameter (d3), wherein the first diameter (d1) is greater than the second diameter (d2) and the second diameter (d2) is greater than the third diameter (d3), wherein the cylinders (51, 52, 53) are stacked on top of each other and preferably in each case at least a base surface of the cylinders (51, 52, 53) is closed or wherein the cylinders (51, 52, 53) are arranged to be fitted into each other, wherein preferably in each case at least a base side of the cylinders (51, 52, 53) is formed to be open.

10. The device according to Claim 9, **characterized in that** the cylinders (51, 52, 53) have a first base side (54) as a bearing surface and a second base side (55) opposite the first base side (54), wherein there is a first height (H1) between the first base surface (54) and the second base side (55) of the first cylinder (51), there is a second height (H2) between the second base side (55) of the first cylinder (51) and the second base side (55) of the second cylinder (52), and there is a third height (H3) between the second base side (55) of the second cylinder (52) and the second base side (55) of the third cylinder (53).

11. The device according to Claim 9 or 10, **characterized in that** the device (50) is arranged on a base plate (58) which is preferably designed to be round or drop-shaped, particularly preferably drop-shaped.

12. A method for forming a charging cable (1) according to any one of Claims 1 to 6 with conical winding in which a cable portion (2) is wound onto a device (50) according to any one of Claims 11 to 12 in which a first sub-portion (2a) of the cable portion (2) is wound on the first cylinder (51) of the device, a second sub-portion (2b) of the cable portion (2) is wound on the second cylinder (52) of the device, and a third sub-portion (2c) of the cable portion (2) is wound on the third cylinder (53) of the device, the device (50) with a wound cable portion (2) being heated in a tempering furnace.

13. The method according to Claim 12 in which the cable portion (2) is heated to a temperature between 25°C and 130°C for at least 50 min.

**Revendications**

1. Câble de charge (1) pour charger un véhicule électrique, comprenant une section de câble (2) et au moins un élément de raccordement (3) à une première extrémité de la section de câble (2), pour la connexion à une prise de charge d'un véhicule électrique ou à une source d'énergie externe au véhicule ; dans lequel la section de câble est mise en forme de telle sorte que la section de câble est maintenue avec une force de rappel dans une position de repos dans laquelle la section de câble présente plusieurs spires, la section de câble (2) étant constituée d'au moins trois sous-sections (2a, 2b, 2c), la première sous-section (2a) ayant un premier diamètre (D1), la deuxième sous-section (2b) ayant un deuxième diamètre (D2) et la troisième sous-section (2c) ayant un troisième diamètre (D3), le premier diamètre (D1) étant supérieur au deuxième diamètre (D2) et le deuxième diamètre (D2) étant supérieur au troisième diamètre (D3), **caractérisé en ce que** les trois sous-sections sont constituées chacune d'au moins deux spires, et **en ce que** la différence entre le premier et le deuxième diamètre (D1, D2) et entre le deuxième et le troisième diamètre (D2, D3) est supérieure à deux fois le diamètre (Dk) de la section de câble (2).

2. Câble de charge selon la revendication 1, dans lequel le premier diamètre (D1), le deuxième diamètre (D2) et le troisième diamètre (D3) sont compris entre 8 fois et 15 fois le diamètre (Dk) de la section de câble (2).

**3.** Câble de charge selon la revendication 1 ou 2, dans lequel la première sous-section (2a), la deuxième sous-section (2b) et la troisième sous-section (2c) présentent chacune au maximum cinq spires.

**4.** Câble de charge selon l'une quelconque des revendications précédentes, dans lequel la première sous-section (2a) présente deux spires et les deuxième et troisième sous-sections (2b, 2c) présentent chacune trois spires.

**5.** Câble de charge selon l'une quelconque des revendications précédentes, dans lequel la section de câble (2) est mise en forme de manière à se rétracter automatiquement dans sa position de repos après utilisation.

**6.** Câble de charge selon l'une quelconque des revendications précédentes, comprenant en outre : un deuxième élément de raccordement (4) à la deuxième extrémité du câble de charge (1).

**7.** Véhicule électrique comprenant un câble de charge (1) selon l'une quelconque des revendications 1 à 6, dans lequel la deuxième extrémité du câble de charge (1) forme un raccordement électrique fixe à la batterie du véhicule électrique et le premier élément de raccordement (3) est adapté pour connecter électriquement le véhicule électrique à une source d'énergie externe d'une station de charge.

**8.** Station de charge comprenant un câble de charge (1) selon l'une quelconque des revendications 1 à 6, dans laquelle la deuxième extrémité du câble de charge (1) forme un raccordement électrique fixe à la source d'énergie de la station de charge et le premier élément de raccordement (3) est adapté pour connecter électriquement la source d'énergie de la station de charge à une batterie d'un véhicule électrique.

**9.** Dispositif (50) pour former un câble de charge (1) selon l'une quelconque des revendications 1 à 6, sous l'effet de la chaleur, avec enroulement conique, comprenant au moins trois cylindres (51, 52, 53), à savoir un premier cylindre (51) ayant un premier diamètre (d1), un deuxième cylindre (52) ayant un deuxième diamètre (d2) et un troisième cylindre (53) ayant un troisième diamètre (d3), le premier diamètre (d1) étant supérieur au deuxième diamètre (d2) et le deuxième diamètre (d2) étant supérieur au troisième diamètre (d3), les cylindres (51, 52, 53) étant empilés les uns sur les autres, et de préférence au moins une surface de base de chacun des cylindres (51, 52, 53) étant fermée ou les cylindres (51, 52, 53) étant agencés les uns dans les autres, de préférence au moins un côté de base de chacun des cylindres (51, 52, 53) étant réalisé ouvert.

**10.** Dispositif selon la revendication 9, **caractérisé en ce que** les cylindres (51, 52, 53) présentent un premier côté de base (54) en tant que surface d'appui et un deuxième côté de base (55) opposé au premier côté de base (54), une première hauteur (H1) existant entre le premier côté de base (54) et le deuxième côté de base (55) du premier cylindre (51), une deuxième hauteur (H2) entre le deuxième côté de base (55) du premier cylindre (51) et le deuxième côté de base (55) du deuxième cylindre (52), et une troisième hauteur (H3) entre le deuxième côté de base (55) du deuxième cylindre (52) et le deuxième côté de base (55) du troisième cylindre (53).

**11.** Dispositif selon la revendication 9 ou 10, **caractérisé en ce que** le dispositif (50) est agencé sur une plaque de base (58), qui est de préférence mise sous forme ronde ou sous forme de goutte, de manière particulièrement préférée sous forme de goutte.

**12.** Procédé pour former un câble de charge (1) selon l'une quelconque des revendications 1 à 6, avec enroulement conique, dans lequel une section de câble (2) est enroulée sur un dispositif (50) selon l'une quelconque des revendications 11 à 12, dans lequel une première sous-section (2a) de la section de câble (2) est enroulée sur le premier cylindre (51) du dispositif, une deuxième sous-section (2b) de la section de câble (2) est enroulée sur le deuxième cylindre (52) du dispositif et une troisième sous-section (2c) de la section de câble (2) est enroulée sur le troisième cylindre (53) du dispositif, le dispositif (50) avec la section de câble (2) enroulée dessus est chauffé dans un four de recuit.

**13.** Procédé selon la revendication 12, dans lequel la section de câble (2) est chauffée à une température comprise entre 25 °C et 130 °C pendant au moins 50 minutes.

1

I'

2

I

3                4

2a           2b          2c

## Fig.1

2

22

25

23

23

21

24

21

Dk

## Fig.2a

22

25

21

23

21

21

21

24

## Fig.2b

Fig.3

Fig.4

Fig.5a

Fig.5b

Fig.6

Fig.7

Fig. 8

Fig. 9